# EUROPEAN PATENT APPLICATION

(11) **EP 4 620 289 A1**
(43) Date of publication of application: **24.09.2025**
(21) Application number: 24315105.7
(22) Date of filing: 22.03.2024
(51) Int. Cl.: A01D 46/26

(54) **HARVESTING UNIT WITH SHAKER SYSTEM**

(71) Applicant: CNH Industrial France S.A.S., 91150 Morigny-Champigny (FR)
(72) Inventor: Paquereau, Cyrille, 91150 Morigny-Champigny (FR)
(74) Representative: CNH Industrial IP Department

(57) **Abstract**

Harvesting unit (3) comprising a shaker device comprising: a rotating vertical shaft with shaker organs ; an oscillatory driving mechanism comprising: a mobile assembly (13) driven in rotation a driving axis; an eccentric module (14) driven in rotation by said assembly and comprising a crankpin (15) connected to the shaft via a rod (16) to transform the rotation of said module into an oscillation of said shaft; an outer frame (24) with gear means (26) engaged with the module (14) to drive the rotation thereof about a spinning axis upon rotation thereof around the driving axis, said crankpin being offset from said spinning axis in order to be driven in rotation around the spinning axis along an elliptical path (E) upon rotation of the module (14), the means (26) being movable about the driving axis to adjust the path orientation in relation to an oscillation direction of the rod (16).

## Description

The invention relates to a harvesting unit, as well as a harvesting machine comprising a motorised support structure which is movable along rows of plants and on which such a harvesting unit is mounted for detaching crop from said plants.

The invention applies in particular to the technical domain of mechanical harvesting of fruits growing on plants, such as trees or bushes, that are arranged in rows, such as grapes, berries, coffee beans, olives, almonds, oranges and other citrus fruits, and other cultivated fruits.

More particularly, the harvesting machine is intended for harvesting olives, said machine being in particular intended to harvesting in so called intensive olive groves or super high density olive orchards.

Fruits are conventionally harvested by a harvesting machine comprising a motorised support structure that is movable along rows of plants, a harvesting unit being mounted on said structure for straddling at least one of said rows of plants and harvesting fruits from said row. To that end, the harvesting unit includes a straddling chassis that delimits a harvesting tunnel into which the plants are successively introduced to move through said tunnel between respective openings at the front and at the rear of said tunnel.

To detach the fruit from the plants, a particular harvesting unit may include a shaker system including at least one shaker device, for example two shaker devices that are provided on respective sides of the harvesting tunnel to delimit said tunnel transversely.

The harvesting machine may further include a system for recovering the crop detached by the harvesting unit, which enables, possibly after cleaning and/or sorting, the storage thereof in at least one hopper provided for that purpose on the harvesting machine or in an ancillary trailer.

Document FR-2 605 487 describes a harvesting unit with a shaker system comprising two shaker devices, each shaker device comprising:
- a vertical shaft mounted for rotation on said chassis about a vertical axis and shaker organs mounted on said shaft;
- an oscillatory driving mechanism of said vertical shaft about said vertical axis, said mechanism comprising:
   ∘ a mobile assembly mounted to be driven in rotation by a driving device about a driving axis;
   ∘ an eccentric module driven in rotation by said mobile assembly about said driving axis, said eccentric module comprising a crankpin;
   ∘ a connecting rod having a first end connected to the crankpin and a second end connected to the vertical shaft to transform the rotation of said module into an oscillation of said vertical shaft.

Document FR-2 605 487 teaches that:
- the length of the connecting rod can be adjusted, so as to adjust the transversal space of the harvesting tunnel; and/or
- the eccentricity of the crankpin in relation to the mobile assembly can also be adjusted to allow adjustment of the amplitude of the transverse oscillatory movements of the shaker organs.

Document US-5 170 614 describes a harvesting machine with two shaker devices that each comprise:
- a drum operable to detach a crop from the plants, said drum comprising a drum shaft mounted for rotation on the chassis of said harvesting unit about a vertical axis, as well as several rods that extend radially and are operable to shake the plants for detaching said crop therefrom;
- a rotational driving device of the drum, said mechanism comprising a rotating driven body and a driving device that is engaged with said driven body to steer its rotation about the vertical axis.
- an oscillatory driving mechanism of the drum about its vertical rotation axis, said mechanism comprising an eccentric module and a second driving device engaged with said module to steer its rotation, said module being drivingly connected to the drum shaft by a connecting rod operable to transform the eccentric rotation of said module into an oscillation of said drum shaft.

In this document US-5 170 614, the oscillatory driving mechanism comprises an impact drive motor which directly drives in rotation an upper crank arm according to a second vertical axis, the eccentric module comprising a crankpin which is mounted for rotation upon the crank arm around a third vertical axis offset from the second axis, and which is connected via a connecting rod to an upper mounting plate arranged above the drum.

Moreover, this document US-5 170 614 explains that the amplitude of oscillatory motion of the shaker device can be adjusted by means of an adjustable support member that is selectively positioned on the upper part of the chassis, combined with a selection of the length of the connecting rod, and the length of the torque arm that mechanically connects said rod with the upper mounting plate.

The solutions provided by both documents FR-2 605 487 and US-5 170 614 are not totally satisfactory, as the adjustment of oscillatory movements requires mechanical maintenance that must be performed apart from a harvesting operation. Thus, an operator driving the machine during a harvesting operation cannot adjust the oscillatory movements of the shaker devices in real time, especially in the case when said movements appear not adapted to the plants to be shaken and/or to the crop to be harvested.

The invention aims to improve the prior art by proposing a harvesting unit wherein the shaker drums are steered in rotation and in oscillation by means of mechanisms that are simple to implement, in particular by being more compact, and wherein the oscillatory movements can be easily adapted, especially by the operator of a harvesting machine during an harvesting operation.

For that purpose, and according to a first aspect, the invention relates to a harvesting unit comprising a chassis intended to be moved along rows of plants to be harvested, and a shaker system including at least one shaker device, said shaker device comprising:
- a vertical shaft mounted for rotation on said chassis about a vertical axis and shaker organs mounted on said shaft;
- an oscillatory driving mechanism of said vertical shaft about said vertical axis, said mechanism comprising:
   ∘ a mobile assembly mounted to be driven in rotation by a driving device about a driving axis;
   ∘ an eccentric module driven in rotation by said mobile assembly about said driving axis, said eccentric module comprising a crankpin;
   ∘ a connecting rod having a first end connected to the crankpin and a second end connected to the vertical shaft to transform the rotation of said module into an oscillation of said vertical shaft;
the oscillatory driving mechanism comprising an outer frame comprising gear means engaged with complementary gear means of the eccentric module, said means being arranged to drive the rotation of said module about a spinning axis upon the rotation of said eccentric module around the driving axis, said crankpin being offset from said spinning axis in order to be driven in rotation around the spinning axis along an elliptical path upon the rotation of the eccentric module about the driving axis, said gear means being movable about the driving axis to adjust the orientation of said elliptical path in relation to an oscillation direction of the connecting rod.

According to a second aspect, the invention relates to a harvesting machine comprising a motorized support structure that is movable along rows of plants, such a harvesting unit being mounted on said motorised support structure for detaching the crop from said plants.

Other aspects and advantages of the invention will become apparent in the following description made with reference to the appended figures, in which:
- figure 1 schematically represents in a side view a harvesting machine according to the invention, said side view being partially cut to show the harvesting unit;
- figure 2 schematically represents the functioning principle of the shaker system of the harvesting unit of figure 1, of which two shaker organs of respectively a shaker device are represented in a top view;

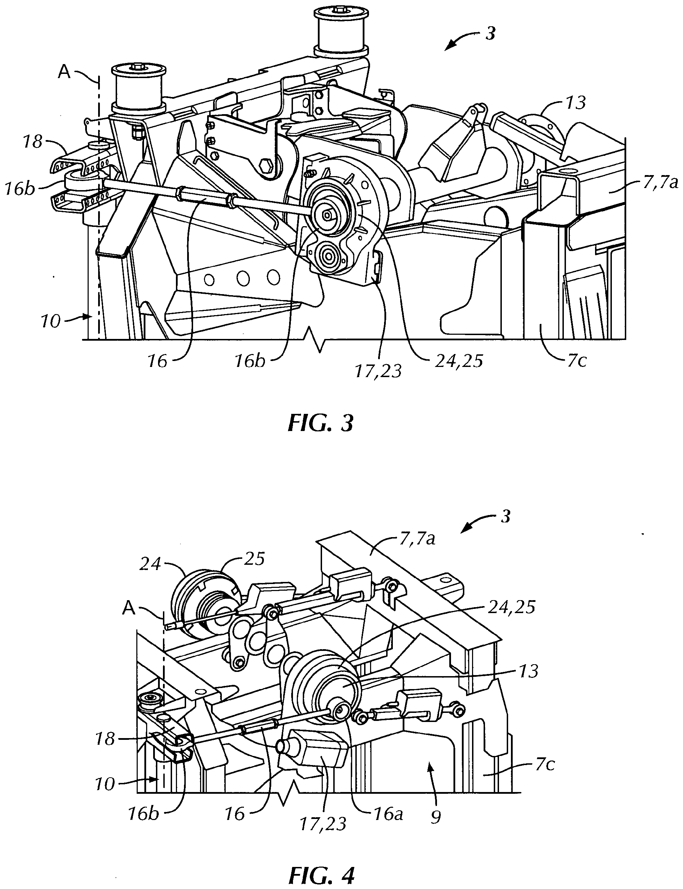

- figures 3 and 4 are schematical representations in perspective top view, respectively from the rear (figure 3) and from the front (figure 4), of a top part of a chassis of a harvesting unit according to the preceding figures, said perspective views being both centred on the oscillatory driving mechanism of a shaker device equipping said harvesting unit;
- figure 5 schematically represents, in a partial perspective top view, an oscillatory driving mechanism of the harvesting unit of the preceding figures;
- figure 6 schematically represents, in a partial disassembled perspective view, the mounting of an eccentric module of the oscillatory driving mechanism of the preceding figures;
- figure 7 schematically represents, in a front view, the mounting of an eccentric module of the preceding figures, figure 7a being a cross-section view according to the section plan A-A of figure 7, and figure 7b showing, in a cross-section view according to a variant of the invention, the mounting of figure 7 on which a driving device is engaged;
- figure 8 schematically shows the elliptical path followed by the eccentric module of a mounting according to the preceding figures;
- figure 9 schematically shows in front view the assembly of a connecting rod on the eccentric module of a mounting according to the preceding figures, as well as the principle of angular adjustment of the elliptical path followed by said eccentric module.

In relation to those figures, we describe below a harvesting unit, as well as a harvesting machine on which such a harvesting unit is mounted.

The harvesting machine is in particular arranged for the mechanical harvesting of fruits growing on plants, such as trees or bushes, that are arranged in rows, such as grapes, berries, coffee beans, olives, almonds, oranges and other citrus fruits, and other cultivated fruits.

To that end, the harvesting machine comprises a motorized support structure 1, which can be equipped in particular with a driver station 2 to receive an operator for piloting said harvesting machine, said driver station comprising commands, for example gathered on a control board, and that the operator can selectively activate to operate different functionalities associated with the movement of the support structure 1 itself or with equipment unit(s) mounted on said support structure.

The support structure 1 is movable along rows of plants to be harvested, a harvesting unit 3 being mounted on said structure for straddling at least one of said rows of plants and detaching fruits from said plants.

In particular, the harvesting unit 3 can be mounted on the support structure 1 permanently or removably, so as to be replaceable by other equipment and accessories, for example spraying equipment, pruning equipment or equipment for working the soil.

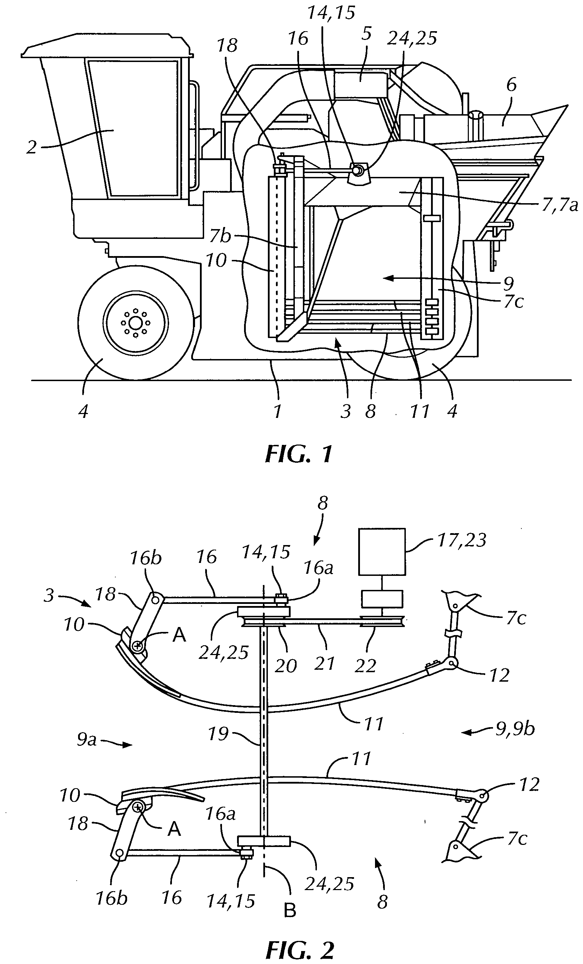

The harvesting machine can comprise at least one hydraulic motor connected to wheels or tracks for enabling the movement of the support structure. In particular, as represented on figure 1, the support structure 1 can be a tractor equipped with four driving and/or steering wheels 4 that are each coupled with a hydraulic motor that is provided with a closed loop hydrostatic transmission circuit.

In particular, the rotation speed of the hydraulic motors can be regulated by a control system with a flow rate proportional to the travelling speed of the support structure 1, said control system possibly being electronical and enabling to correct said rotation speed according to the variations of said travelling speed (speed reduction, differences between the travelling speed in uphill and downhill slopes, slipping).

The harvesting machine can also include a recovery unit for recovering the crop detached by the harvesting unit, as well as a unit 5 for cleaning and/or sorting said detached crop to eliminate components other than fruit, in particular leaves, leaf stalks and wood particles, before the storage of said crop in at least one hopper 6 provided for that purpose on the harvesting machine or in an ancillary trailer.

The harvesting unit 3 comprises a chassis 7 that can be mounted on the support structure 1 in a fixed or in a pendulum manner about a horizontal and longitudinal axis. In particular, as represented partially on figure 1, the chassis 7 comprises several metallic profiles that can be assembled by welding, so as to form an upper structure 7a, two front vertical left and right pillars 7b, as well as two rear vertical left and right pillars 7c.

In the description, the terms of positioning in space are taken with reference to the harvesting machine. In particular:
- the term "longitudinal" refers to a horizontal direction parallel to the movement of the machine during a normal displacement thereof, for example during a harvesting operation, the term "transverse" referring the an horizontal direction perpendicular to said longitudinal direction;
- the terms "front" and "rear" refer to positions according to the longitudinal displacement of the machine in normal conditions of use thereof, and are located respectively on the left and the right on figure 1;
- the terms "outside" and "inside" are taken in reference to the transverse direction and according to the relative position of a user that looks the machine from a side thereof, and are used to point a space position respectively facing said user and opposite to said user.

The harvesting unit 3 comprises a shaker system which comprises at least one shaker device 8 mounted on the chassis 7. In relation to figures 1 and 2, the chassis 7 delimits a tunnel 9 for successive introduction of plants to be harvested to move through said tunnel between respective openings at the front and at the rear of said tunnel, the shaker system comprising two shaker devices 8 that are arranged respectively on one side of said tunnel to delimit said tunnel transversely.

In particular, the shaker system can be designed as presented in document FR-2 605 487.

As represented on figures 1 and 2, the shaker devices 8 each comprise a vertical shaft 10 that is mounted for rotation about a vertical axis A, for example by means of two roller bearings, on a front area of the upper part 7a of the chassis 7 and on a lower end of respectively a front pillar 7b.

Moreover, each shaker device 8 comprises a plurality of shaker organs 11 that extend longitudinally and are mounted on the corresponding vertical shaft 10 by being spaced vertically from one another, the shaker organs 11 of each of said devices being spaced transversely to delimit between them the harvesting tunnel 9.

Referring to figure 2, the shaker organs 11 are curved and held between two front rotating vertical shafts 10 and two rear vertical shafts 12 that are mounted in rotation relative to respectively a rear pillar 7c of the straddling chassis 7. Moreover, the front end of each shaker organ 11 is mounted on, for example screwed to, the corresponding vertical shaft 10.

In order to optimize the operational shaking height of the harvesting unit 3, the shaker system may comprise shaker organs 11 that extend vertically over substantially all the height of the shaking tunnel 9. In particular, each shaker device 8 may comprise up to approximately twenty shaker organs 11, the shaker organs 11 of a shaker device 8 being offset vertically relative to the shaker members organs 11 of the other shaker device 8.

Moreover, the shaker organs 11 are curved and held between the front vertical shafts 10 and the rear vertical shafts 12, respectively, to form between them a convergent front opening 9a and a divergent rear opening 9b of the shaking tunnel 9.

In the figures, each shaker organ 11 has an elongate geometry, notably taking the form of a rod that has a small section compared to its length. In particular, for harvesting grapes, the organs 11 have a diameter of the order of 30 mm, and more particularly of 30 mm, and a length of the order of 1.8 m.

Each shaker organ 11 is arranged to exert a shaking effort on the plants independently from the other shaker organs 11, and can be made of a flexible material, for example a polyester resin charged with fiberglass, or polyamide, said material having an optimal flexibility/rigidity trade-off for ensuring an efficient shaking of the plants while ensuring the preservation of said plants. It is also possible to provide shaker organs 11 made of a more flexible material, such as for example polyurethane.

Moreover, shaker organs 11 can be hollow or full, or they can have a structure with a core having the desired flexibility properties and surrounded by a layer made of a wear material that is different from the material of the core.

The shaker devices 8 also comprise each an oscillatory driving mechanism 25 of their respective vertical shaft 10 about the respective rotation vertical axis A thereof.

Each oscillatory driving mechanism 25 comprises:
- a mobile assembly 13 mounted to be driven in rotation by a driving device 17 about a driving axis B;
- an eccentric module 14 driven in rotation by said mobile assembly about said driving axis, said eccentric module comprising a crankpin 15;
- a connecting rod 16 having a first end 16a connected to the crankpin 15 and a second end 16b connected to the corresponding vertical shaft 10, so as to transform the rotation of said module into an oscillation of said vertical shaft.

In relation to the figures, each driving mechanism comprises a horizontal arm 18 fixed to the upper end of the corresponding vertical shaft 10. Alternatively, the horizontal arms 18 may be fixed to the lower ends of their respective vertical shafts 10.

Each arm 18 is articulated via a vertical pivot of the front end of respectively a connecting rod 16, the rear end of said connecting rod being attached to a crankpin 15 of an eccentric module 14, as explained hereinabove.

Moreover, the shaker system comprises a common driving device 17 to drive in rotation the mobile assemblies 13 of both oscillatory driving mechanisms 25. In the embodiment shown, the driving device 17 comprises:
- a driven rotor shaft 19 that extends along the driving axis B, which corresponds to a transverse direction on the figures, said rotor shaft further comprises two ends that are connected to respectively a mobile assembly 13 to drive it in rotation about said driving axis B;
- a pulley or a chain wheel 20 that is fixed to the transverse rotor shaft 19 and connected by a transmission belt or an endless chain 21 to a second pulley or a chain wheel 22 that is driven in rotation by a motor 23, for example a hydraulic motor.

Accordingly, when the motor 23 turns, the driving device 17 activates each oscillatory driving mechanism, so as to move each shaker device 8 by causing each vertical shaft 10 to oscillate about its vertical axis A.

In operation, the shaker organs 11 are oscillated so that their interior faces, that is to say the faces directed toward the interior of the shaking tunnel 9, repeatedly come in contact with the plants successively introduced into said tunnel, depending on the amplitude and the frequency of the oscillatory movements operated by the driving device 17, in order to transmit to said plants a shaking force operable to cause the fruits to drop off.

Advantageously, the machine comprises means for controlling the driving device 17 such that the oscillation speeds or frequencies of the shaker devices are set according to the travelling speed of the support structure 1 on the field during a harvesting operation.

This control of the speed and/or of the frequency of the oscillatory movements enables to control optimally and continuously the shaking of the plants, in particular concerning the effort exerted by the shaker organs 11 on said plants, which enables to harvest the crop efficiently while preserving the integrity of said plants.

The oscillation driving mechanisms 25 can be driven by hydraulic means that are integrated either directly into the hydrostatic transmission circuit for the movement of the support structure 1, or into an auxiliary transmission circuit that is independent and parallel to said movement transmission circuit, said hydraulic driving means being controlled in particular through a flow rate control that is proportional to the movement of the support structure 1.

According to a variant, the oscillation driving mechanisms 25 and/or the movement of the support structure 1 can be driven by any other known driving means, for example through electrical means.

However, there is also a need to adapt the parameters of these oscillatory movements, especially their amplitude, according to various features of the plants to be shaken, among which the type of said plants to be shaken, the quantity of leaves thereof, or the type of fruits growing on said plants (grapes, berries...). In particular, when the amplitude of oscillatory movements is not adapted, the harvested crop may contain a great number of waste products (leaves, petioles...) and/or a too high number of wasted fruits, and the plants may even be damaged.

To facilitate the adjustment of oscillatory movements, each oscillatory driving mechanism 25 comprises an outer frame 24 that comprises gear means 26 engaged with complementary gear means 27 of the eccentric module 14, said means being arranged to drive the rotation of said module about a spinning axis C upon the rotation of said eccentric module around the driving axis B.

Moreover, the crankpin 15 of the eccentric module 14 is offset from the spinning axis C of said module, in order to be driven in rotation around the spinning axis C along an elliptical path E upon the rotation of said module about the driving axis B, the gear means 26 being also movable about the driving axis B to adjust the orientation of said elliptical path in relation to an oscillation direction of the connecting rod 16.

In the description, the terms "inner" and "outer" are taken in reference to the driving axis B, and refer to a space position that is respectively close to and far from said driving axis.

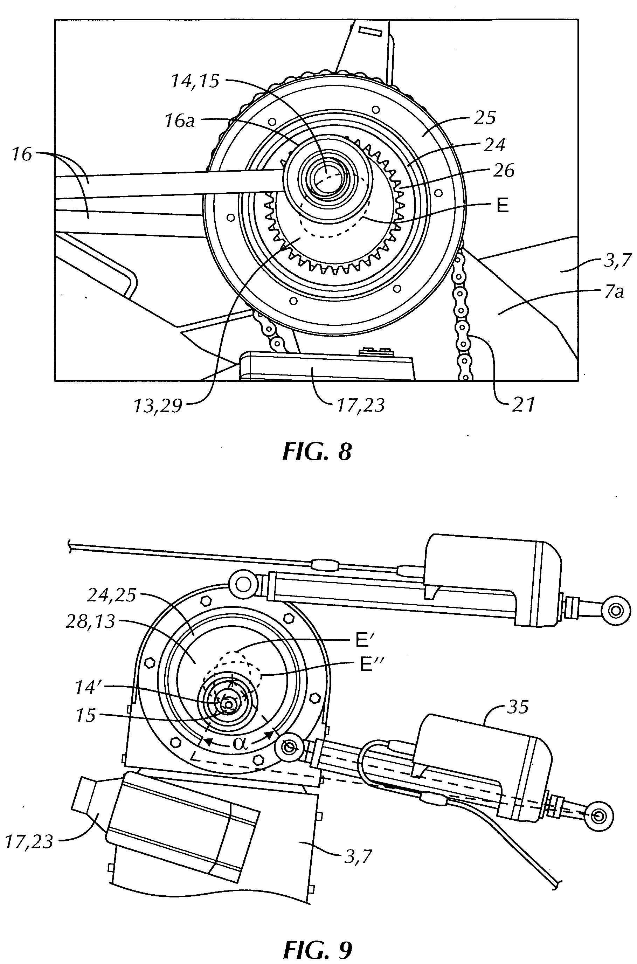

In relation to figure 9, the gears means 26 are movable in rotation within an angular interval α comprised between two angles of orientation of respectively the minor axis (path E') and the major axis (path E") of the elliptical path E in the continuity of the oscillation direction of the connecting rod 16, said limit angles corresponding to respectively a minimum and a maximum amplitude for the oscillation movements.

Each mobile assembly 13 comprises at least one disk 28, 29 which is mounted for rotation about the driving axis B within the outer frame 24, while being driven in rotation by the driving device 17, said disk comprising an offset opening 28a, 29a wherein the eccentric module 14 is mounted for rotation about the spinning axis C.

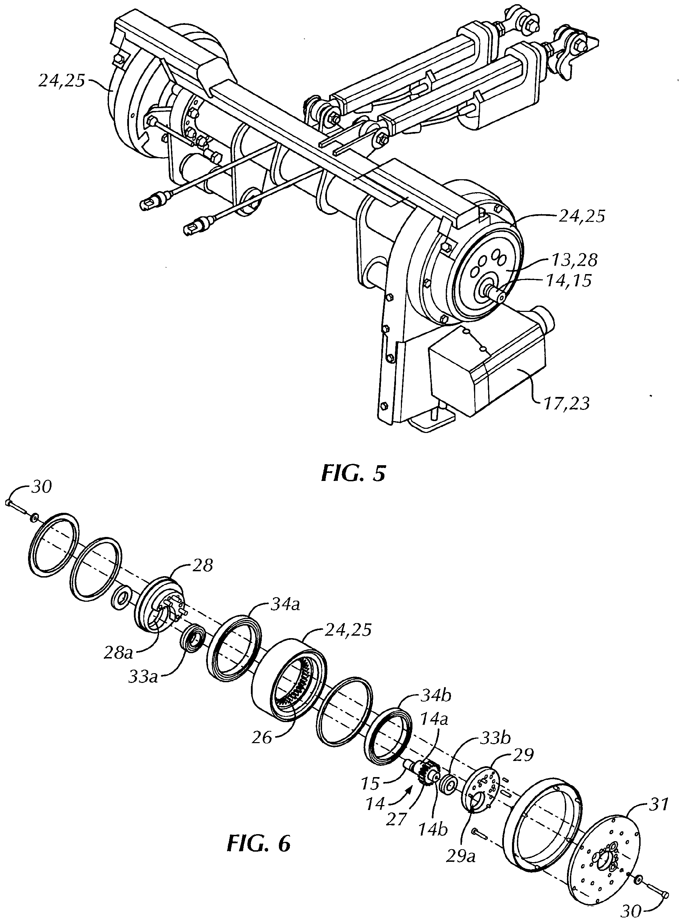

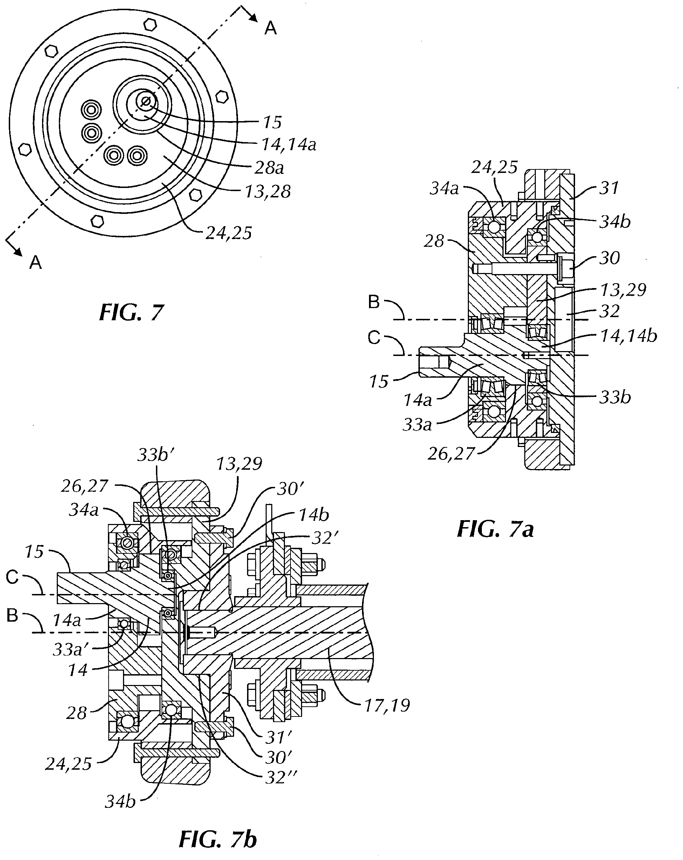

In relation to the figures, and as represented more particularly in figures 6, 7a and 7b, each mobile assembly 13 comprises an outside and an inside disks 28, 29 that are both mounted for rotation about the driving axis B on respectively an outside and an inside face of the outer frame 24, and that both comprise an offset opening 28a, 29a wherein respectively an outside 14a and an inside 14b part of the eccentric module 14 are mounted for rotation about the spinning axis C, the driving device 17 being connected in rotation to the inside disk 29.

In particular, as represented on figure 7b, the inner disk 29 of each mobile assembly 13 is connected to respectively one end of the rotor shaft 19 to be driven in rotation around the driving axis B.

On figures 6 and 7a, the disks 28, 29 are stacked along the driving axis B and are both fixed by screws 30 to an inside disk-shaped plate 31, the latter comprising a central bore 32 wherein an end of the rotor shaft 19 is to be mounted.

In the variant shown on figure 7b, the inside disk-shaped plate 31' is fixed to the inside disk 29 by at least two diametrically spaced screws 30', said plate and said inner disk both comprising a central bore 32', 32" wherein the end of the rotor shaft 19 is axially arranged.

In both variants shown, the eccentric module 14 is mounted for rotation about the spinning axis C within each offset opening 28a, 29a of the corresponding disk 29 by means of respectively an outside 33a, 33a' and an inside 33b, 33b' bearing, said bearings being either angular contact bearings 33a, 33b (figures 6 and 7a) or ball contact bearings (figure 7b).

In a same manner, each disk 28, 29 is mounted for rotation about the driving axis B within the outer frame 24 by means of a bearing 34a, 34b, which are all ball bearings in the variants shown.

As represented more particularly on figures 6, 7a, 7b and 8, the outer frame 24 comprises a body of substantially cylindrical shape with an inner wall on which a inner geared crown 26 is formed as gear means, the eccentric module 14 comprising an outer pinion 27 as complementary gears means, said pinion being geared with said inner crown.

In particular, the outer pinion 27 is axially arranged between the outside and inside parts 14a, 14b of the eccentric module 14.

Advantageously, the outer pinion 27 has a number of teeth which is half of the number of teeth of the inner gear crown 26, which guarantees the driving of the crankpin 15 along an elliptical path E, E', E" as described hereinabove.

Each oscillatory driving mechanism 25 also comprises a device 35 for piloting the rotation of the gear means 26 about the driving axis B, so as to adjust the orientation of the elliptical path E, E', E" according to the desired amplitude for the oscillatory movements of the shaking devices 8.

According to figure 9, each gear piloting device 35 comprises an electrical actuator member that is mechanically connected to an outer wall of the body of the corresponding frame 24, said actuator member being advantageously remotely operable, so as to allow easy adjustment, especially during an harvesting operation, of the angular orientation of the path E, E', E", and then the oscillatory amplitude of the devices 8.

To do so, the driver station 2 may comprise a special command, in particular arranged on the control board thereof, so as to be actuated by the operator of the machine to remotely operate the actuator members 35 if needed.

## Claims

1. Harvesting unit (3) comprising a chassis (7) intended to be moved along rows of plants to be harvested, and a shaker system including at least one shaker device (8), said shaker device comprising:
- a vertical shaft (10) mounted for rotation on said chassis about a vertical axis (A) and shaker organs (11) mounted on said shaft;
- an oscillatory driving mechanism (25) of said vertical shaft about said vertical axis (A), said mechanism comprising:
∘ a mobile assembly (13) mounted to be driven in rotation by a driving device (17) about a driving axis (B);
∘ an eccentric module (14) driven in rotation by said mobile assembly about said driving axis, said eccentric module comprising a crankpin (15);
∘ a connecting rod (16) having a first end (16a) connected to the crankpin (15) and a second end (16b) connected to the vertical shaft (10) to transform the rotation of said module into an oscillation of said vertical shaft;
said harvesting unit being **characterized in that** the oscillatory driving mechanism (25) comprises an outer frame (24) comprising gear means (26) engaged with complementary gear means (27) of the eccentric module (14), said means being arranged to drive the rotation of said module about a spinning axis (C) upon the rotation of said eccentric module around the driving axis (B), said crankpin being offset from said spinning axis in order to be driven in rotation around the spinning axis (C) along an elliptical path (E, E', E") upon the rotation of the eccentric module (14) about the driving axis (B), said gear means being movable about the driving axis (B) to adjust the orientation of said elliptical path in relation to an oscillation direction of the connecting rod (16).

2. Harvesting unit (3) according to claim 1, **characterized in that** the outer frame (24) comprises an inner gear crown (26), the eccentric module (14) comprising an outer pinion (27) which is geared with said inner crown.

3. Harvesting unit (3) according to claim 2, **characterized in that** the outer pinion (27) comprises a number of teeth which is half of the number of teeth of the inner gear crown (26).

4. Harvesting unit (3) according to any one of claims 1 to 3, **characterized in that** the oscillatory driving mechanism (25) comprises a device (35) for piloting the rotation of the gear means (26) about the driving axis (B).

5. Harvesting unit (3) according to claim 4, **characterized in that** the gear piloting device (35) comprises an electrical actuator member that is remotely operable.

6. Harvesting unit (3) according to any one of claims 1 to 5, **characterized in that** the gears means (26) are movable in rotation within an angular interval (α) comprised between two angles of orientation of respectively the minor axis and the major axis of the elliptical path (E, E', E") in the continuity of the oscillation direction of the connecting rod (16).

7. Harvesting unit (3) according to any one of claims 1 to 6, **characterized in that** the mobile assembly (13) comprises at least one disk (28, 29) which is mounted for rotation about the driving axis (B) within the outer frame (24), while being driven in rotation by the driving device (17), said disk comprising an offset opening (28a, 29a) wherein the eccentric module (14) is mounted for rotation about the spinning axis (C).

8. Harvesting unit (3) according to claim 7, **characterized in that** the mobile assembly (13) comprises an outside (28) and an inside (29) disks that are both mounted for rotation about the driving axis (B) on respectively an outside and an inside face of the outer frame (24), and that both comprise an offset opening (28a, 29a) wherein respectively an outside (14a) and an inside (14b) part of the eccentric module (14) are mounted for rotation about the spinning axis (C), the driving device (17) being connected in rotation to the inside disk (29).

9. Harvesting unit (3) according to one of claims 7 or 8, **characterized in that** the eccentric module (14) is mounted for rotation about the spinning axis (C) within the offset opening (28a, 29a) of the at least one disk (28, 29) by means of a bearing (33a, 33b, 33a', 33b').

10. Harvesting unit (3) according to any one of claims 7 to 9, **characterized in that** the at least one disk (28, 29) is mounted for rotation about the driving axis (B) within the outer frame (24) by means of a bearing (34a, 34b).

11. Harvesting unit (3) according to any one of claims 7 to 10, **characterized in that** the driving device (17) comprises a driven rotor shaft (19) which extends along the driving axis (B) on an upper part (7a) of the chassis (7), the at least one disk (28, 29) being connected to an end of said rotor shaft to be driven in rotation around said driving axis.

12. Harvesting unit (3) according to any one of claims 1 to 11, **characterized in that** the chassis (7) delimits a tunnel (9) for successive introduction of plants to be harvested, the shaker system comprising two shaker devices (8) that are arranged respectively on one side of said tunnel.

13. Harvesting machine comprising a motorized support structure (1) that is movable along rows of plants, a harvesting unit (3) according to any one of claims 1 to 12 being mounted on said motorized support structure for detaching the crop from said plants.

14. Harvesting machine according to claims 13 when depending from claim 5, **characterized in that** it comprises a driver station (2) that is mounted on the motorized support structure (1) to receive an operator for piloting said harvesting machine, said driver station comprising a command that is arranged to be actuated by said operator to remotely operate the electrical actuator member of the gear piloting device (35) to adjust the orientation of the elliptical path (E, E', E").
